# FASCICULE DE BREVET EUROPEEN

(11) **EP 3 132 079 B1**
(45) Date de publication et mention de la délivrance du brevet: **23.11.2022**
(21) Numéro de dépôt: 15721767.0
(22) Date de dépôt: 31.03.2015
(51) Int. Cl.: D06F 39/00, A47J 31/60, A47J 31/00, C02F 5/10, D06F 75/14, D06F 75/16, D06F 75/18

(54) **APPAREIL ELECTROMENAGER AVEC AGENT ANTITARTRE BIODEGRADABLE**
HAUSHALTSGERÄT MIT EINEM BIOLOGISCH ABBAUBAREN ENTKALKUNGSMITTEL
HOUSEHOLD APPLIANCE WITH A BIODEGRADABLE, ANTI SCALE AGENT

(30) Priorité: 15.04.2014 FR 1453381
(43) Date de publication de la demande: 22.02.2017
(73) Titulaire: SEB S.A., 69130 Ecully (FR)
(72) Inventeur: HORNER, Olivier, 94320 Thiais (FR); CHEAP-CHARPENTIER, Hélène, 75013 Paris (FR); POURMOHTASHAM, Ermane, 92120 Montrouge (FR); GELUS, Dominique, 38780 Pont-Eveque (FR); PECOUL, Nathalie, 69006 Lyon (FR)
(74) Mandataire: Regimbeau
(86) Numéro de dépôt international: PCT/FR2015/050840
(87) Numéro de publication internationale: WO 2015/158977

(56) Documents cités:
- EP-A1- 0 610 997
- EP-A1- 2 705 784
- EP-A2- 2 671 480
- WO-A2-2011/128672
- GB-A- 1 433 221
- GB-A- 2 386 612

## Description

La présente invention se rapporte au domaine technique général des appareils électroménagers et concerne plus précisément les appareils comportant un réservoir d'eau et des moyens pour faire bouillir et/ou évaporer l'eau en provenance du réservoir, dans lesquels on utilise un agent antitartre biodégradable au moins partiellement soluble dans l'eau pour éviter la formation et le dépôt de tartre.

La présente invention concerne également un procédé pour inhiber la formation et le dépôt de tartre dans des appareils électroménagers en contact avec un milieu aqueux, ainsi qu'un procédé pour limiter l'accumulation d'extraits secs accumulés dans un évaporateur, ces procédés mettant en œuvre un agent antitartre biodégradable au moins partiellement soluble dans l'eau.

Par substance biodégradable, on entend, au sens de la présente invention, toute substance pouvant être décomposée sous l'action de microorganismes. Le résultat est la formation d'eau, de dioxyde de carbone, et/ou de méthane, et éventuellement de sous-produits (résidus, biomasse) non toxiques pour l'environnement.

Par appareils électroménagers comportant un réservoir d'eau et des moyens pour faire bouillir et/ou évaporer l'eau en provenance du réservoir et utilisables dans le cadre de la présente invention, on entend, au sens de la présente invention, des appareils comportant d'une part un réservoir d'eau en métal, en céramique ou en matière plastique et dans lequel circule ou séjourne un milieu aqueux froid ou chaud, et d'autre part des moyens pour faire bouillir et/ou évaporer l'eau en provenance du réservoir (par exemple une chambre de vaporisation dans un fer à repasser ou une résistance chauffante dans une bouilloire).

Comme appareils répondant à cette définition, on citera par exemple les appareils de soin du linge tels que les fers à vapeur, les centrales à vapeur, et les autres appareils générant de la vapeur pour le repassage (notamment les systèmes vapeur à pompe et les défroisseurs vapeur verticaux), les fours vapeur, les cuiseurs vapeur, les stérilisateurs, les fontaines distribuant de l'eau froide ou de l'eau chaude, les cafetières, les théières, les bouilloires, les aspirateurs vapeur, les appareils domestiques de traitement de l'eau du robinet, les jets dentaires, les appareils pour le soin de la personne tels que les lisseurs à vapeur.

Par tartre, on entend, au sens de la présente invention, tout dépôt à base essentiellement de carbonate de calcium CaCO₃ qui forme des particules ou des accumulations solides en divers endroits sur des surfaces en métal, en céramique ou en matière plastique, qui sont en contact avec de l'eau, et qui sont de nature à diminuer les performances de tel ou tel appareil et à conduire à un vieillissement prématuré de certaines pièces, diminuant ainsi la durée de vie de l'appareil, ou de nature à créer des particules gênantes pour le consommateur.

Par agent antitartre, on entend, au sens de la présente invention, toute substance apte à inhiber la formation de tartre, soit en retardant la précipitation du carbonate de calcium, soit en ralentissant sa cinétique de précipitation une fois que celle-ci a démarré.

La formation de tartre est un problème majeur dans de nombreuses industries et installations domestiques. L'utilisation d'inhibiteurs efficaces (communément appelés « agents antitartre ») peut prolonger la durée de vie des appareils et équipements.

Pour supprimer ou au moins réduire le dépôt de tartre dans les appareils électroménagers, en particulier dans les fers à repasser ou les cafetières, différents moyens ont déjà été proposés. Ainsi, on connaît des dispositifs traitant l'eau pour empêcher la précipitation du tartre par voie chimique préalablement à la vaporisation. Ces dispositifs présentent toutefois l'inconvénient majeur de nécessiter l'ajout d'un produit acide délicat à manipuler.

Il est connu du document brevet EP 2 671 480 un dispositif de détartrage comprenant un réservoir pouvant être chargé avec de l'eau froide par l'intermédiaire d'une arrivée d'eau. Le réservoir d'eau comprend un agent de détartrage soluble dans l'eau se présentant sous forme de poudre ou de pâte. Cet agent de détartrage pet être biologiquement dégradable. Ce dispositif comprend en outre un dispositif pour amener de la vapeur.

Il est connu par ailleurs d'utiliser des polyphosphates ou de l'hexamétaphosphate de sodium (HMPS), car ils ralentissent la croissance des cristaux de CaCO₃ (comme illustré dans la demande de brevet internationale WO 98/28485 et le brevet européen EP 1 146 164). Cependant, l'effet de ces polyphosphates n'est pas démontré dans un générateur de vapeur où la cuve concentre les minéraux à une température de 140°C.

Les phosphonates ont une action similaire aux polyphosphates, mais avec une stabilité thermique supérieure. En particulier, les brevets EP 0 610 997 et US 5,507,108 décrivent l'utilisation de phosphonates disposés dans le réservoir d'un fer à repasser pour réduire le dépôt calcaire dans le système d'alimentation d'eau situé entre le réservoir et la chambre de vaporisation. Cependant, bien que la dissolution dans l'eau de ces produits soit lente et permette au fer de conserver une longue durée de vie, la dissolution est plus rapide au début de l'utilisation et l'effet diminue trop vite pour que le fer atteigne une durée de vie normale. Les produits préconisés doivent être pastillés et ce n'est pas une forme qui facilite le contrôle de la dissolution dans l'eau, obligeant à des mélanges de sels divers et complexes.

Les phosphonocarbonates, les polymères carboxyliques (comme enseigné par le brevet européen EP 1 418 253) et les polyamines aliphatiques sont également connus pour leur activité antitartre.

Cependant, l'utilisation même d'agents antitartre impacte l'environnement, ce qui a eu pour conséquence d'accroître la demande pour des systèmes permettant la maîtrise des quantités d'agent antitartre utilisées (systèmes dits à relargage contrôlé).

Ainsi par exemple, la demande internationale WO 98/28485 décrit un appareil électroménager en contact avec un milieu aqueux, comportant un circuit d'eau traversant un compartiment dans lequel est introduit un dispositif antitartre à relargage contrôlé. Ce dispositif est formé par une matrice silicone dans laquelle est dispersée une matière active antitartre. Cette matière active, de type phosphate (en particulier de l'hexamétaphosphate de sodium), est relarguée hors de la matrice silicone de manière contrôlée et adaptée en fonction du volume d'eau. Le brevet américain US 5,507,108 décrit un fer à repasser comprenant notamment un système pour le dosage de l'injection d'un composé de phosphonate dans le réservoir. Enfin, le brevet français FR 2785166 décrit une cafetière goutte-à-goutte comportant un réservoir d'eau alimentant un chauffe-eau à circulation continue et un dispositif de traitement de l'eau du réservoir consistant en un dispositif pour le microdosage d'une quantité d'agent antitartre qui est adaptée au volume d'eau fourni au chauffe-eau.

De tels systèmes sont toutefois complexes, et utilisent des produits connus pour impacter l'environnement, et exigent parfois de la part de l'utilisateur des opérations de maintenance.

La demanderesse a découvert que l'introduction, dans le réservoir d'eau froide d'un appareil électroménager, d'un agent antitartre biodégradable, et soluble dans l'eau, permet de pallier les problèmes précités, tout en améliorant le confort d'utilisation du produit par réduction des opérations de maintenance et de son impact environnemental. Par exemple, dans le cas d'un générateur de vapeur d'un appareil de repassage, l'utilisation d'un tel agent antitartre permet d'éviter au consommateur d'avoir à intervenir sur la cuve sous pression, ce qui est une opération fastidieuse et anxiogène, et que l'utilisateur renonce le plus souvent à effectuer (au détriment d'ailleurs de l'accumulation de tartre à l'intérieur de la cuve du générateur de vapeur). L'utilisation d'un tel agent a aussi pour effet de ne plus provoquer de rejet de particules de tartre au travers des trous de la semelle du fer à repasser.

Plus particulièrement, la présente invention a pour objet un appareil électroménager comportant un réservoir d'eau et un système d'alimentation en eau communiquant avec ledit réservoir, ledit réservoir d'eau, et éventuellement ledit système d'alimentation en eau, comprenant au moins un agent antitartre et des moyens pour faire bouillir et/ou évaporer l'eau en provenance du réservoir ou comprise dans le réservoir (par exemple une chambre de vaporisation si l'appareil électroménager est un générateur de vapeur d'appareil de repassage ou plus simplement une résistance de bouilloire électrique).

A titre d'appareils électroménagers utilisables dans le cadre de la présente invention, on peut notamment citer les fers à vapeur, les générateurs de vapeur, les nettoyeurs vapeur, les défroisseurs vapeur, les aspirateurs vapeur, les appareils domestiques de traitement de l'eau du robinet, les fours vapeur, les cuiseurs vapeur, les stérilisateurs, les jets dentaires, les fontaines distribuant de l'eau froide ou de l'eau chaude, les cafetières, les théières, les bouilloires, et encore les appareils pour le soin de la personne tels qu'un lisseur à vapeur.

Selon l'invention, l'agent antitartre est un agent biodégradable, qui est au moins partiellement, et de préférence complètement soluble dans l'eau.

Par rapport aux agents antitartre classiquement utilisés dans le domaine des appareils électroménagers en contact avec un milieu aqueux (par exemple ceux à base de dérivés phosphatés, ou de phosphocarbonates, de polymères carboxyliques ou encore de polyamines aromatiques), les agents antitartre utilisables dans le cadre de la présente invention présentent une efficacité au moins égale, tout en permettant d'éliminer les opérations de maintenance sur la cuve. En outre, ils présentent un impact environnemental réduit car ils sont biodégradables, et nécessairement inoffensifs pour l'homme.

De préférence, ces agents antitartre sont de nature alimentaire.

L'agent antitartre est présent dans le réservoir d'eau à une teneur comprise entre 0,5 ppm et 500 ppm. Au-dessous de 0,5 ppm, l'agent antitartre ne serait pas efficace, tandis qu'au-dessus de 1000 ppm, cela impliquerait une quantité trop importante d'agent antitartre à inclure dans le réservoir par rapport à l'effet produit.

L'agent antitartre est un mélange d'aloe vera et d'acide polyaspartique (PASP).

L'agent antitartre selon l'invention peut agir contre la formation de tartre selon plusieurs modes d'actions possibles (vitesse de formation, forme cristallographique, taille...), seuls ou combinés entre eux :
▪ il peut retarder la précipitation des cristaux de carbonate de calcium CaCO₃, par exemple en modifiant leur forme (ce qui peut empêcher leur développement),
▪ il peut réduire la cinétique de précipitation du CaCO₃, une fois que celle-ci a démarré,
▪ la taille finale des cristaux peut également être modifiée, ce qui peut empêcher l'entraînement et le dépôt de particules visibles sur le linge.

On pourra par exemple chercher à combiner un agent antitartre qui retarde la formation des cristaux de CaCO₃ avec un autre agent antitartre qui agit plutôt sur sa cinétique de formation.

Par conséquent, la présente invention a aussi pour objet un procédé pour inhiber la formation et le dépôt de tartre dans un appareil électroménager en contact avec un milieu aqueux, caractérisé en ce qu'il comprend l'introduction puis la diffusion dans ledit milieu aqueux à traiter de 0,5 ppm à 500 ppm d'un agent antitartre biodégradable soluble dans l'eau qui est un mélange d'aloe vera et d'acide polyaspartique (PASP), en vue d'y inhiber la germination et/ou la croissance de cristaux de carbonate de calcium (CaCO₃).

L'agent antitartre pourra être de préférence introduit sous forme liquide dans le milieu aqueux, cette introduction pouvant se faire par exemple par microdosage, en mode manuel ou automatique.

Mais il peut également être possible d'introduire l'agent antitartre dans le milieu aqueux sous forme solide, par exemple dans une matrice de relargage, ou dilué dans une structure poreuse, ou encore sous une forme solide disposée à l'entrée du réservoir et agissant par diffusion dans le milieu aqueux.

L'appareil électroménager est tel que défini précédemment.

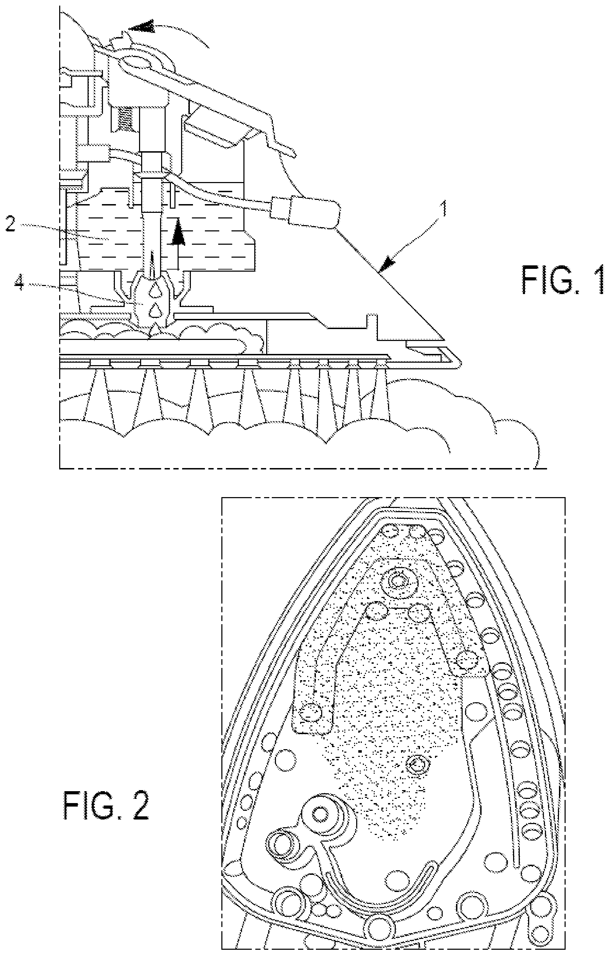

D'autres avantages et particularités de la présente invention résulteront de la description qui va suivre, donnée à titre d'exemple non limitatif et faite en référence aux figures annexées :
- la figure 1 représente une vue schématique en coupe d'un fer vapeur classique à chambre de vaporisation instantanée, que l'on utilise pour réaliser le test sur banc d'endurance accéléré décrit ci-après,
- la figure 2 représente une photographie de l'intérieur de la chambre de vaporisation de la semelle du fer à repasser de la figure 1 après un essai sur banc d'endurance accéléré comprenant le passage de 40 litres d'eau du robinet (de dureté 27° F) sans agent antitartre (température de la semelle de l'ordre de 200°C),
- la figure 3 représente une image de microscopie électronique à balayage (MEB) représentant en détail une zone entartrée de l'intérieur de la chambre de vaporisation de la semelle du fer à repasser illustrée sur la figure 2,
- la figure 4 représente une photographie de l'intérieur de la chambre de vaporisation de la semelle du fer à repasser de la figure 1 après l'essai sur banc d'endurance accéléré comprenant le passage de 40 litres d'eau du robinet (de dureté 27° F) dans laquelle on a ajouté un agent antitartre selon un premier mode de réalisation de la présente l'invention,
- la figure 5 représente une image de microscopie électronique à balayage (MEB) représentant en détail une zone entartrée de l'intérieur de la chambre de vaporisation de la semelle du fer à repasser illustrée sur la figure 4,
- la figure 6 représente une photographie de l'intérieur de la chambre de vaporisation de la semelle du fer à repasser de la figure 1 après l'essai sur banc d'endurance accéléré comprenant le passage de 40 litres d'eau du robinet (de dureté 27° F) dans laquelle on a ajouté un autre agent antitartre selon un deuxième mode de réalisation du procédé selon l'invention,
- la figure 7 représente une photographie de l'intérieur de la chambre de vaporisation de la semelle du fer à repasser de la figure 1 après une utilisation avec de l'eau du robinet (de dureté 27° F) dans laquelle on a ajouté un agent antitartre classique de type polyphosphate (conformément à l'art antérieur),
- la figure 8 représente une vue schématique en coupe d'un fer à générateur de vapeur séparé, que l'on utilise pour réaliser le test d'endurance sur générateur décrit ci-après,
- la figure 9 représente une photographie montrant :
   o dans le grand récipient, l'aspect de l'eau en provenance de la cuve en acier inoxydable de l'appareil de repassage de la figure 1, qui est récoltée à l'issue d'un test d'endurance sur générateur, et
   o dans le petit récipient, le cumul des précipités qui passent par l'électrovanne en sortie de cuve, dans le cas où l'eau initialement introduite dans le réservoir du générateur de vapeur ne comporte pas d'agent antitartre,

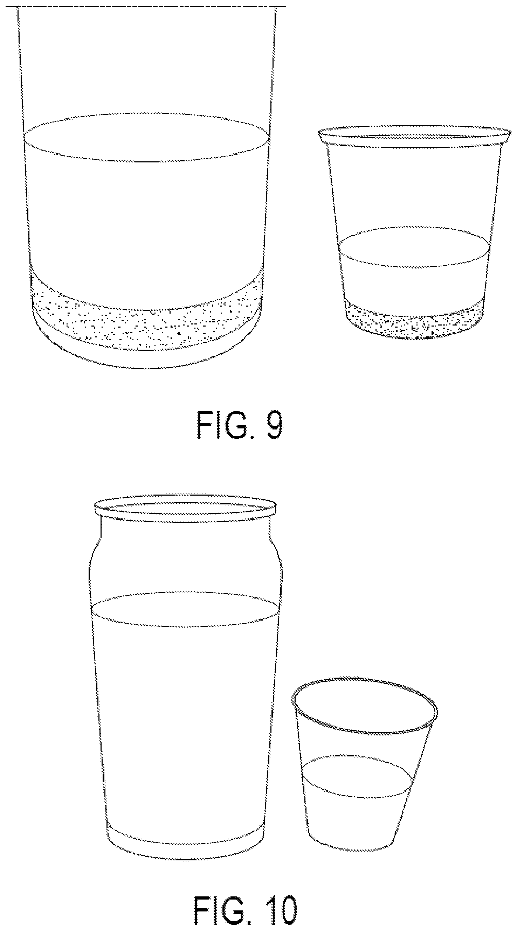

- la figure 10 représente une photographie montrant :
   o dans le grand récipient, l'aspect de l'eau en provenance de la cuve en acier inoxydable de l'appareil de repassage de la figure 1, qui est récoltée à l'issue d'un test d'endurance sur générateur, et
   o dans le petit récipient, le cumul des précipités qui passent par l'électrovanne en sortie de cuve,
   dans le cas où l'eau initialement introduite dans le réservoir du générateur de vapeur comporte un agent antitartre biodégradable conformément à la présente invention.

### Protocole expérimental du test sur banc d'endurance accéléré

Ce test d'endurance est réalisé sur un banc d'endurance accéléré.

On utilise pour cela le fer vapeur 1 illustré sur la figure 1. Ce fer vapeur 1 comprend un réservoir d'eau 2 et un système d'alimentation 4 en eau communiquant avec le réservoir 2. Le fer vapeur 1 comprend en outre des moyens de chauffe pour faire bouillir et/ou évaporer et/ou chauffer l'eau en provenance du réservoir 2 ou comprise dans le réservoir 2.

Le test d'endurance sur banc d'endurance accéléré consiste à injecter sous cycles alternés de 10 s de fonctionnement et 10 s d'arrêt, 40 litres d'eau du robinet (de dureté 27° F), à raison de 30g/min dans la chambre de vapeur de la semelle du fer à repasser qui reste en statique pour cumuler les dépôts. L'eau du réservoir d'eau tombe directement dans la semelle chaude du fer à repasser pour s'évaporer instantanément.

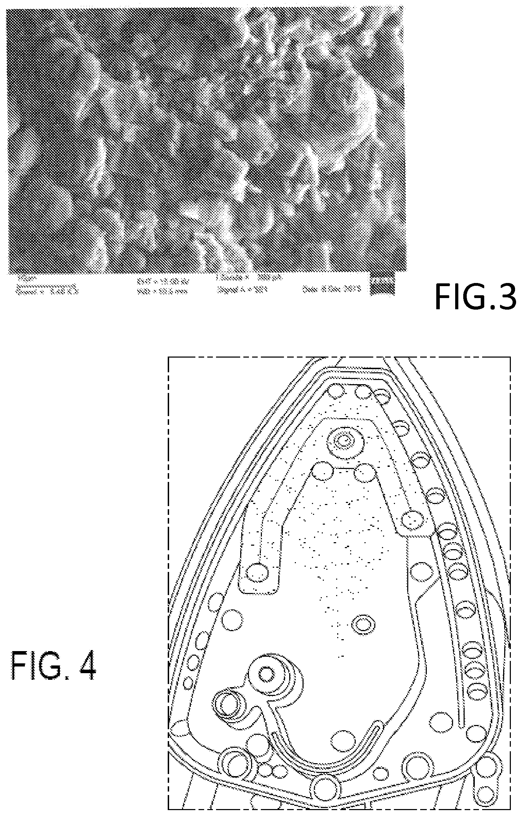

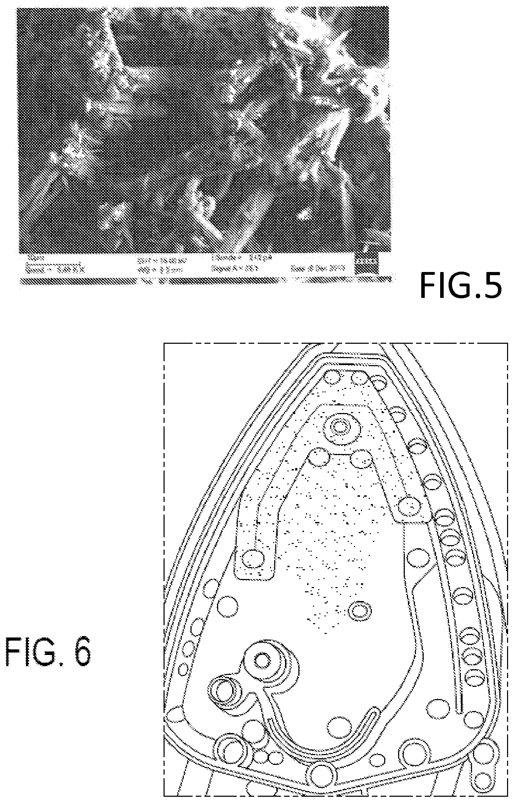

Les résultats de ce test sont illustrés sur les figures 2 à 7, qui sont commentées dans le tableau 1 de résultats ci-après.

**Tableau 1**

| Nature de l'eau du robinet | Aspect de l'intérieur de la fonderie aluminium | Aspect des cristaux de tartre |
|---|---|---|
| Sans agent antitartre | **Figure 2** **(sans agent antitartre)** | **Figure 3** **(sans agent antitartre)** |
| | La zone de vaporisation est entartrée sur plus de la moitié de sa surface. On observe une épaisse couche de tartre. Le fer ne peut plus vaporiser. | On observe la présence de cristaux cubiques de calcite (structure cristalline stable de carbonate de calcium), qui sont collés les uns aux autres. Peu de cristaux se détachent de la paroi. |
| Avec agent antitartre | **Figure 4** ***(4 ppm d'acide polyaspartique)*** | **Figure 5** ***(4 ppm d'acide polyaspartique)*** |
| | La zone de vaporisation est beaucoup moins entartrée que sur la figure 2. On note la présence de particules de calcaire non adhérentes. La semelle peut accepter de l'eau, d'autant plus que les particules sont destinées à être éjectées en repassage réel. | La forme des cristaux est modifiée par la présence de 4 ppm d'acide polyaspartique : on observe des particules libres sous forme d'aiguilles (structure cristalline différente de la calcite : aragonite). |
| Avec agent antitartre selon l'invention | **Figure 6** ***(2 ppm d'acide polyaspartique et 3 ppm d'aloe vera)*** | |
| | De même que sur la figure 4, la zone de vaporisation est beaucoup moins entartrée que sur la figure 2. On note la présence de particules de calcaire non adhérentes. Les cristaux se détachent sous forme de plaquettes plus grosses que précédemment. | |
| Avec agent antitartre de l'art antérieur | **Figure 7** ***(40 ppm de polyphosphate)*** | |
| | La zone de vaporisation est moins entartrée qu'avec une eau non traitée (cf. figure 2) mais plus entartrée que pour l'eau additionnée d'acide polyaspartique /inhibiteur « vert » (cf. figures 4 et 6). | |

### Protocole expérimental du test d'endurance sur générateur

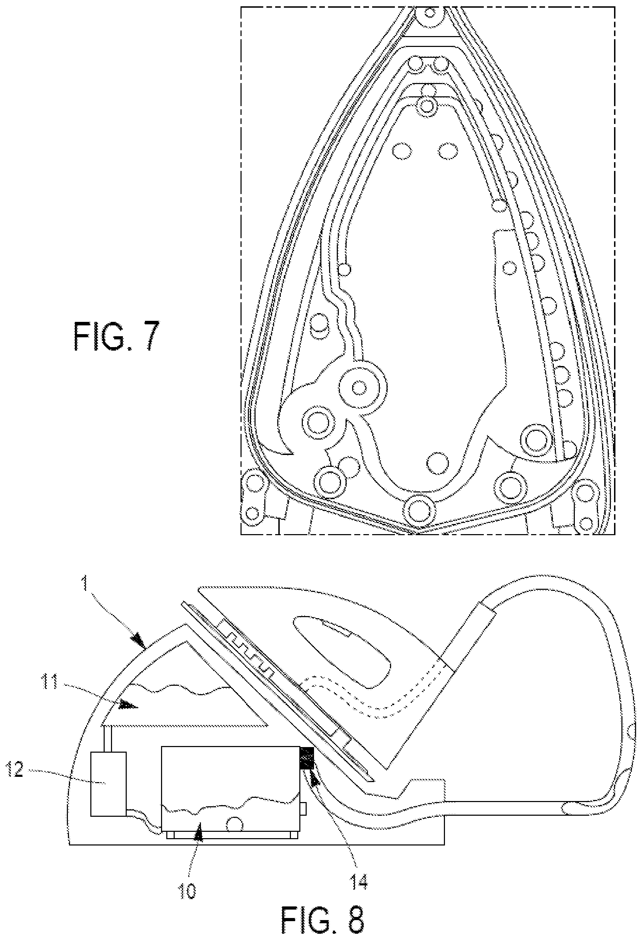

Le deuxième test d'endurance est réalisé à l'aide d'un fer à générateur de vapeur séparé illustré sur la figure 8.

Le générateur de vapeur 1 est constitué classiquement par une cuve sous pression 10 pour la production de vapeur sous pression, un réservoir d'eau 11 et une pompe 12. Le réservoir 11 est rempli d'eau froide par l'utilisateur de l'appareil de repassage, et cette eau froide est envoyée régulièrement au moyen de la pompe 12 dans la cuve sous pression 10 où la température de l'eau atteint 140°C. L'eau froide est vaporisée dans la cuve sous pression et la vapeur est entrainée vers le fer à repasser via un cordon d'alimentation.

Le test consiste à évaporer de l'eau injectée à l'aide de la pompe 12 dans la cuve 10 sous pression et maintenue à une température légèrement supérieure à 100°C. 8 litres d'eau sont ainsi traités.

Les résultats de ce test sont illustrés sur les figures 9 et 10, qui sont commentées ci-dessous :
- la figure 9 représente une photographie montrant l'aspect de l'eau en provenance de la cuve récoltée à l'issue du test d'endurance sur générateur (grand flacon), ainsi que celui de l'eau récoltée en sortie d'électrovanne 14 avant d'arriver à la semelle du fer (petit flacon), dans le cas où l'eau initialement introduite dans le réservoir du générateur de vapeur ne comporte pas d'agent antitartre :
   ▪ on note que l'eau du grand flacon est trouble, à cause de la présence de tartre en suspension, et
   ▪ on observe que des particules de tartre se sont déposées au fond des deux flacons.
- la figure 10 représente également une photographie montrant l'aspect de l'eau en provenance de la cuve récoltée à l'issue du test d'endurance sur générateur (grand flacon), ainsi que celui de l'eau récoltée en sortie d'électrovanne 14 avant d'arriver à la semelle du fer (petit flacon), dans le cas où l'eau initialement introduite dans le réservoir du générateur de vapeur comporte un agent antitartre conformément au procédé selon l'invention (2 ppm d'acide polyaspartique et 300 ppm d'aloe vera) :
   ▪ on note que l'eau du grand flacon est claire : il n'y a pas de tartre en suspension, et
   ▪ on observe très peu, voire pas du tout de particules de tartre déposées au fond de chacun des deux flacons.

## Revendications

1. Appareil électroménager (1) comportant un réservoir d'eau (2) et un système d'alimentation (4) en eau communiquant avec le réservoir (2), ledit réservoir (2), et éventuellement ledit système d'alimentation (4) en eau, comprenant au moins un agent antitartre biodégradable au moins partiellement soluble dans l'eau et des moyens (3) pour faire bouillir et/ou évaporer l'eau en provenance du réservoir (2) ou comprise dans le réservoir (2), **caractérisé en ce que** ledit agent antitartre est présent dans le réservoir d'eau (2) à une teneur comprise entre 0,5 ppm et 500 ppm et **en ce que** l'agent antitartre est un mélange d'aloe vera et d'acide polyaspartique (PASP).

2. Appareil (1) selon la revendication 1, dans lequel l'agent antitartre est complètement soluble dans l'eau.

3. Appareil (1) selon l'une quelconque des revendications précédentes, **caractérisé en ce qu'**il s'agit d'un fer à vapeur, ou d'une centrale vapeur, ou d'un nettoyeur vapeur, ou d'un défroisseur vapeur, ou d'un aspirateur vapeur, ou d'un appareil domestique de traitement de l'eau du robinet, ou d'un four vapeur, ou d'un cuiseur vapeur, ou d'un stérilisateur, ou d'un jet dentaire, ou d'une fontaine distribuant de l'eau froide ou de l'eau chaude, ou d'une cafetière, ou d'une théière, ou d'une bouilloire, ou encore d'un appareil pour le soin de la personne tel qu'un lisseur à vapeur.

4. Procédé pour inhiber la formation et le dépôt de tartre dans un appareil électroménager (1) selon la revendication 1 en contact avec un milieu aqueux, **caractérisé en ce qu'**il comprend l'introduction puis la diffusion dans ledit milieu aqueux à traiter de 0,5 ppm à 500 ppm, d'un agent antitartre biodégradable au moins partiellement soluble dans l'eau qui est un mélange d'aloe vera et d'acide polyaspartique (PASP).

5. Procédé selon la revendication 4, dans lequel ledit agent antitartre est introduit sous forme liquide dans le milieu aqueux.

6. Procédé selon l'une quelconque des revendications 4 ou 5, dans lequel l'appareil électroménager est un fer à vapeur, ou un générateur de vapeur, ou un nettoyeur vapeur, ou un défroisseur vapeur, ou un aspirateur vapeur, ou un appareil domestique de traitement de l'eau du robinet, ou un four vapeur, ou un cuiseur vapeur, ou un stérilisateur, ou un jet dentaire, ou une fontaine distribuant de l'eau froide ou de l'eau chaude, ou une cafetière, ou une théière, ou une bouilloire, ou encore un appareil pour le soin de la personne tel qu'un lisseur à vapeur.

## Patentansprüche

1. Haushaltsgerät (1), das einen Wasserbehälter (2) und ein Wasserzufuhrsystem (4) umfasst, das mit dem Behälter (2) verbunden ist, wobei der Behälter (2) und gegebenenfalls das Wasserzufuhrsystem (4) mindestens ein biologisch abbaubares Entkalkungsmittel, das zumindest teilweise in Wasser löslich ist, und Mittel (3) umfassen, um das von dem Behälter (2) stammende oder im Behälter (2) enthaltene Wasser zum Sieden und/oder Verdampfen zu bringen, **dadurch gekennzeichnet, dass** das Entkalkungsmittel in dem Wasserbehälter (2) mit einem Gehalt von zwischen 0,5 ppm und 500 ppm vorhanden ist, und dadurch, dass das Entkalkungsmittel ein Gemisch aus Aloe Vera und Polyasparaginsäure (PASP) ist.

2. Gerät (1) nach Anspruch 1, wobei das Entkalkungsmittel vollständig in Wasser löslich ist.

3. Gerät (1) nach einem der vorhergehenden Ansprüche, **dadurch gekennzeichnet, dass** es sich um ein Dampfbügeleisen oder um eine Dampfbügelstation oder um einen Dampfreiniger oder um einen Dampfglätter oder um einen Dampfsauger oder um ein Haushaltsgerät zur Leitungswasserbehandlung oder um einen Dampfofen oder um einen Dampfkocher oder um einen Sterilisator oder um eine Munddusche oder um einen Brunnen, der Kaltwasser oder Warmwasser abgibt, oder um eine Kaffeemaschine oder um eine Teekanne oder um einen Teekessel oder auch um ein Körperpflegegerät, wie beispielsweise einen Dampfhaarglätter, handelt.

4. Verfahren zur Hemmung der Bildung und der Ablagerung von Kalk in einem Haushaltsgerät (1) nach Anspruch 1, das mit einem wässrigen Medium in Kontakt ist, **dadurch gekennzeichnet, dass** es die Einführung und dann die Verbreitung von 0,5 ppm bis 500 ppm eines zumindest teilweise in Wasser löslichen, biologisch abbaubaren Entkalkungsmittels, das ein Gemisch aus Aloe Vera und Polyasparaginsäure (PASP) ist, in das bzw. dem zu behandelnden wässrigen Medium umfasst.

5. Verfahren nach Anspruch 4, wobei das Entkalkungsmittel in flüssiger Form in das wässrige Medium eingeführt wird.

6. Verfahren nach einem der Ansprüche 4 oder 5, wobei das Haushaltsgerät ein Dampfbügeleisen oder ein Dampferzeuger oder ein Dampfreiniger oder ein Dampfglätter oder ein Dampfsauger oder ein Haushaltsgerät zur Leitungswasserbehandlung oder ein Dampfofen oder ein Dampfkocher oder ein Sterilisator oder eine Munddusche oder ein Brunnen, der Kaltwasser oder Warmwasser abgibt, oder eine Kaffeemaschine oder eine Teekanne oder ein Teekessel oder auch ein Körperpflegegerät, wie beispielsweise ein Dampfhaarglätter, ist.

## Claims

1. Electrical household appliance (1) having a water tank (2) and a water supply system (4) communicating with the tank (2), said tank (2), and optionally said water supply system (4), comprising at least one biodegradable limescale-inhibiting agent that is at least partially soluble in water and means (3) for boiling and/or evaporating the water coming from the tank (2) or contained in the tank (2), **characterised in that** said limescale-inhibiting agent is present in the water tank (2) at a concentration between 0.5 ppm and 500 ppm and **in that** the limescale-inhibiting agent is a mixture of Aloe vera and polyaspartic acid (PASA).

2. Appliance (1) according to claim 1, wherein the limescale-inhibiting agent is completely soluble in water.

3. Appliance (1) according to any one of the preceding claims, **characterised in that** it is a steam iron, or a steam generator, or a steam cleaner, or a steamer, or a steam vacuum cleaner, or a household appliance for treating tap water, or a steam oven, or a steam cooker, or a steriliser, or a dental water jet, or a fountain dispensing cold water or hot water, or a coffee maker, or a tea maker, or a kettle or even an appliance for personal care such as a steam hair straightener.

4. Method for preventing the formation and deposit of limescale in an electrical household appliance (1) according to claim 1 in contact with an aqueous medium, **characterised in that** it comprises the introduction then diffusion, in said aqueous medium to be treated, of 0.5 ppm to 500 ppm of a biodegradable limescale-inhibiting agent that is at least partially soluble in water and which is a mixture of aloe vera and polyaspartic acid (PASA).

5. Method according to claim 4, wherein said limescale-inhibiting agent is introduced in liquid form into the aqueous medium.

6. Method according to any one of claims 4 or 5, wherein the electrical household appliance is a steam iron, or a steam generator, or a steam cleaner, or a steamer, or a steam vacuum cleaner, or a household appliance for treating tap water, or a steam oven, or a steam cooker, or a steriliser, or a dental water jet, or a fountain dispensing cold water or hot water, or a coffee maker, or a tea maker, or a kettle or even an appliance for personal care such as a steam hair straightener.
